# EUROPEAN PATENT APPLICATION

(11) **EP 2 221 984 A1**
(43) Date of publication of application: **25.08.2010**
(21) Application number: 09290130.5
(22) Date of filing: 23.02.2009
(51) Int. Cl.: H04B 5/00, G06K 17/00

(54) **Wireless communication device for providing at least one near field communication service**

(71) Applicant: Motorola, Inc., Schaumburg, IL 60196 (US)
(72) Inventor: Buhot, Thomas, 31200 Toulouse (FR)
(74) Representative: Cross, Rupert Edward Blount

(57) **Abstract**

A wireless communication device (102), for providing at least one Near Field Communication service to a user, comprises at least one application element for use in providing the at least one Near Field Communication service, and a communication section (204) for providing a communication link between at least one Near Field Communication target device (106) and the wireless communication device (102) when the at least one Near Field Communication target device is within a Near Field Communication range of the communication section. The communication section (204) is arranged to detect a break in a communication link between the wireless communication device (102) and at least one Near Field Communication target device. An interface element (213, 215, 404, 500) notifies the at least one application element when at least one Near Field Communication target device is detected within the Near Field Communication range and the at least one application element is arranged to communicate over a communication link with a detected at least one Near Field Communication target device. The interface element (213, 213, 404, 500) generates and sends to the at least one application element a target removal event in response to the communication section (204) detecting a break in a communication link between the wireless communication device (102) and a detected at least one Near Field Communication target device.

## Description

### Field of the Disclosure

This disclosure relates to a wireless communication device for providing at least one Near Field Communication service to a user and a method of providing communication between a wireless communication device capable of providing a Near Field Communication service and at least one Near Field Communication target device.

### Background of the Disclosure

Near Field Communication (NFC) is a short-range wireless communication technology which enables the exchange of data between devices allowing users of NFC enabled devices to use NFC services such as performing contactless transactions, accessing digital content and connecting devices with a single touch.

NFC is based on contactless and Radio Frequency Identification (RFID) solutions, which typically consist of a tag or device storing a small amount of data and a reader. The reader, when activated, emits a short-range radio signal that when brought next to the tag, powers up a microchip on the tag, and allows for reading a small amount of data that is stored on the tag. However, NFC is different from other contactless or RFID technologies in that it has a very short operating distance and also allows two devices to interconnect. The effective distance of an NFC solution depends on the tag design and the reader, but is typically only a few centimetres. The underlying layers of NFC technology are based on ISO/IEC 14443, ECMA 340, ECMA 352, ETSI 102 613, and NFC forum standards.

Investigations are being performed into the use of NFC in mobile phones. The current main use cases for NFC in a mobile phone include:
Card emulation - the NFC enabled device can behave like an existing contactless NFC card;
Reader mode: the NFC enabled device can read a passive NFC tag, for example for interactive advertising;
Peer-to-Peer (P2P) mode: two NFC enabled devices can communicate together and exchanging information e.g. to set up a Bluetooth connection.

Examples of the different types of NFC services that may be available to an user of a mobile phone having NFC capability include:
Ticketing services such as mobile ticketing in public transport which is an extension of the existing contactless infrastructure, and electronic ticketing such as for airline tickets, concert/event tickets;
Payment services where for example the mobile phone acts as a debit/credit payment card or possibly electronic money;
Advertising services where for example the mobile phone is used to read NFC tags on advertising boards in order to access information easily whilst on the move;
Exchanging small amounts of data quickly such as electronic business cards, calendar synchronisation;
Bluetooth or Wi-Fi pairing where for example the process of activating Bluetooth or Wi-Fi between two devices can be achieved by a simple "touch" of the devices and thereafter communication takes place over a Bluetooth or Wi-Fi communication link;
Loyalty services, for example, the mobile phone acts as a loyalty card; and
Identity services, for example, the mobile phone acts as an identity card or key.

A mobile phone that supports NFC stores different NFC application elements for use in providing the NFC services. The NFC applications may be stored in a secure element and/or may be stored in the program memory of the mobile device. The secure element may be a dedicated module or chipset that is part of the mobile phone or may be a removable component, such as the UMTS Integrated Circuit Card (UICC) also known as the SIM card or USIM card or a removable memory card.

A mobile device having NFC capability will, in addition to a RF communication section, typically include a NFC modem for enabling communication with a NFC target device. An NFC application element running on a mobile device typically communicates with the NFC modem through an interface such as the Host Controller Interface (HCI) Application Programming Interface (API). The HCI between the NFC modem and the UICC is currently standardized at an ETSI standardization committee as recorded in the technical Specifications UICC-ContactLess Front-end (CLF) interface; Host Controller Interface (HCI) Release 7 (ETSI TS 102 622 V7.0.0 (2008-02).

In a reader mode, the mobile device that supports NFC can detect and exchange requests with a NFC target device, which is typically a passive device such as a tag or a tag in the form of a plastic card, under the control of a NFC application element and using the NFC modem. Tags may contain different kinds of data and actions for the mobile device. For example, an URL to browse, business card contacts to register, Bluetooth configuration details to set, phone numbers to call etc. As an example, a common use case in reader mode is for the mobile device to read an URL stored in a tag. After having decoded the URL, the mobile device may then launch a browser to display the html pages to the user.

In order to be able to communicate with a NFC tag, the tag must be close enough to the mobile device to be in a RF field generated at the antenna of the mobile device by the short-range radio signal provided by the NFC modem. In order to detect the presence of tags in the RF field, the NFC application element typically sends a reader request to the NFC modem through the HCI. The NFC modem then initiates a detection mode in order to detect tags in the RF field. In a 'one shot' detection mode, in response to a reader request the NFC modem pings the RF field to check if at least one NFC tag is present or not. If a NFC tag is present, the NFC tag sends a response back to the NFC modem and the NFC tag is detected. Irrespective of whether a response from a NFC tag is received or not, the detection mode is then exited. In a 'forever' detection mode, in response to a reader request, the NFC modem enters a detection loop and searches for a NFC tag until at least one NFC tag has been detected (e.g. the NFC modem receives a response to a 'ping') or the mobile exits the detection mode. When one or more tags are detected, the NFC modem stops the detection loop and generates and sends an event to the NFC application element though the HCI. The event the HCI generates is defined as EVT_TARGET_DISCOVERED. This event contains information about the detected tags, and may include for each detected tag information such as the NFC identifier of the detected tag, application data, the RF type of the detected tag which defines the RF modulation and are typically standardised (for example, Type A (ISO/IEC 14443 parts 2, 3 and 4), Type B (ISO/IEC 14443 parts 2, 3 and 4), Type B' (ISO/IEC 14443 part 2) or Type F (ISO/IEC 18092 also known as NFCIP-1)), protocols supported by the detected tag, memory mapping etc.. The NFC application element may then communicate with some of these detected tags by sending connection requests to some of these detected tags to exchange data with them.

The NFC RF standards (ISO/IEC 18092 also known as NFCIP-1 and ISO/IEC 14443 part 2) specifies however that only one detected tag can be addressed at a time by the mobile device. The other detected tags remain in a HALT state waiting for a wake-up RF event initiated by the NFC modem for example in response to a reader request or activation request from the NFC application element. Thus, the NFC application element has to exchange requests with all detected tags separately which typically involves the NFC application element performing the following exchanges with each of the detected tags: send a select or wake-up RF request to activate or wake-up a particular detected tag, send multiple exchange requests to communicate data between the mobile device and the particular detected tag and send a deselect or halt RF request to deactivate or halt the particular detected tag and set it in the HALT state.

An NFC application element does not know whether a detected tag is still present in the RF field or whether a communication link between the NFC modem and detected tag still exists until the NFC application element sends a request to it and interprets the error status of the request. When a detected tag is removed from the RF field or when the communication link between the detected tag and the NFC modem is broken or lost, there will be no response to the request and so the error status will indicate that the detected tag has been removed from the RF field or the communication link has been broken or lost. Thus, the requests sent by the NFC application element to removed detected tags or detected tags for which the communication link has been broken are useless and power is consumed in the mobile device needlessly to send such requests. For example, each request requires 50 mA and may be generated every 5ms. This inefficiency is particularly undesirable in battery powered devices where an aim is to minimise power consumption so as to maximise battery life.

### Brief Description of the Drawings

A wireless communication device for providing at least one Near Field Communication service to a user and a method of providing communication between a wireless communication device capable of providing a Near Field Communication service and at least one Near Field Communication target device, in accordance with the disclosure will now be described, by way of example only, with reference to the accompanying drawings in which:
FIG. 1 is a block schematic diagram of a communication system arrangement in accordance with an embodiment of the disclosure;
FIG. 2 is a block schematic diagram of a wireless communication device in accordance with an embodiment of the disclosure;
FIG. 3 is a simplified schematic diagram representing an example flow of interactions between a NFC application element, an interface element and the NFC modem of FIG.2 when detecting NFC target devices in accordance with an embodiment of the disclosure;
FIG. 4 is a block schematic diagram of an example UICC card implementation of the NFC unit of the wireless communication device of FIG. 2;
FIG. 5 is a simplified schematic diagram representing an example flow of interactions between a NFC application element, a discovery management element, an HCI interface element and the NFC modem of FIG.2 when detecting NFC target devices in accordance with an embodiment of the disclosure; and
FIG. 6 is a simplified schematic diagram of an example implementation of a detector of FIG. 2 for detecting devices in the NFC range of the wireless communication device.

### Detailed Description of the Drawings

In the following description, examples of embodiments of the disclosure will be described with respect to a mobile device operating within one or more wireless communication networks, such as a 2nd generation cellular communication system known as the Global System for Mobile communication (GSM) with General Packet Radio System (GPRS) capability, a 3rd generation cellular communication system such as an Universal Mobile Telecommunication system (UMTS), or Long Term Evolution (LTE) communication system. It will however be appreciated the present disclosure can be used in other types of wireless communication devices and networks, such as a subscriber unit, wireless user equipment, a portable telephone, a wireless video or multimedia device, a communication terminal, a personal digital assistant (PDA), a laptop computer, or any electronic device having wireless capability, such as a digital camera which can transfer pictures wirelessly. The term wireless communication device for providing at least one NFC service is thus intended to cover all electronic devices which have wireless capability to provide NFC services to a user.

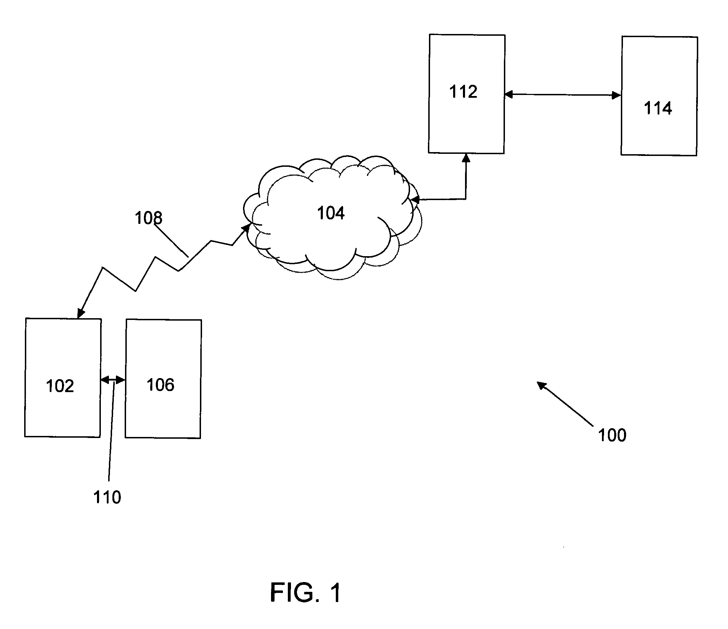

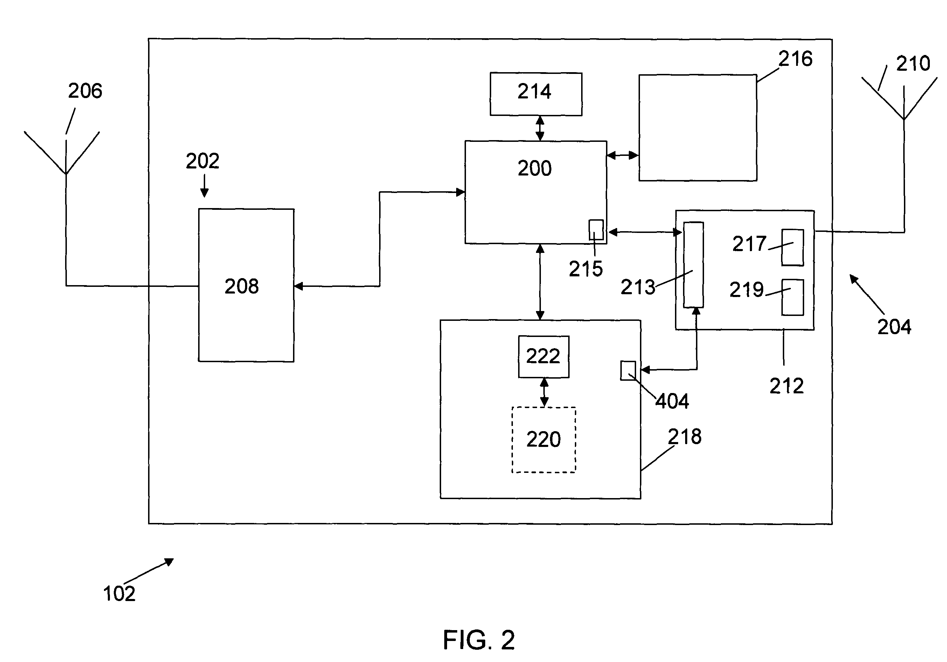

Referring firstly to FIG. 1, a communication system arrangement 100 comprises a mobile device 102 having NFC capability (that is, having wireless capability to provide NFC services to a user) and being capable of operating with a communication system 104 such as a GSM communication system. In the following, the communication system will be described as a GSM communication system but it will be appreciated that the disclosure may apply to any communication system and it is not intended to limit the disclosure to a GSM communication system. As is well known, the GSM communication system 104 provides a plurality of coverage areas or cells (not shown) served by base stations (not shown) with which the mobile device 102 can operate or communicate via radio communication links (such as link 108 shown in FIG. 1). Device 106 also has NFC capability and in an example, and as will be described herein, device 106 is a NFC target device with which the mobile device 102 can communicate when the NFC target device 106 is within a Near Field Communication (NFC) range of the mobile device 102 (which is typically a distance of less then 1 metre). The mobile device 102 may operate in a reader mode of operation when communicating with the NFC target device 106 such that the mobile device 102 may read data in a NFC memory (not shown) of the NFC target device 106. The mobile device 102 may also or instead operate in a writer mode of operation when communicating with the NFC target device 106 such that the mobile device 102 may write data in a NFC memory (not shown) of the NFC target device 106. The mobile device 102 may also or instead operate in a peer-to-peer mode of operation when communicating with the NFC target device 106 such that the mobile device 102 may exchange data in a NFC memory (not shown) of the NFC target device 106 and the NFC target device 106 can exchange data in a NFC memory (such as memory in the NFC unit 218 shown and described below with reference to FIG. 2) of the mobile device 102. The NFC target device 106 may be another mobile device capable of operating with the GSM communication system 104 or with another wireless communication system (not shown) or a NFC tag, such as a tag in the form of a plastic card, or may be a fixed device such as a fixed NFC tag. When the mobile device 102 and device 106 are close enough, for example within a NFC range of a couple of centimetres, a NFC communication link 110 can be established and data can be exchanged between the devices 102, 106.

In an example, the NFC target device 106 may be a tag storing a URL. A NFC communication link 110 is established between the mobile device 102 and the tag 106 when the mobile device 102 is close enough to the tag 106. The mobile device 102 enters a reader mode of operation in which it detects and exchanges requests with the tag 106 to read the URL stored in the tag 106. The mobile device 102 then decodes the URL and launches a browser in the mobile device 102 so as to display, for example, the html pages referenced by the URL to a user of the mobile device 102.

In another example, the mobile device 102 and the NFC target device 106 may be devices having Bluetooth communication capability. A NFC communication link 110 is established between the mobile device 102 and the NFC target device 106 to exchange data so as to enable a Bluetooth communication link to be established between the devices for subsequent communications.

The mobile device 102 may in other modes of operation act as a writer or a passive NFC device such as a tag.

FIG. 2 is a block diagram of a wireless communication device, such as the mobile device 102 shown in FIG. 1, in accordance with an embodiment of the disclosure. As will be apparent to a skilled person, FIG. 2 shows only the main functional components of an exemplary mobile device 102 that are necessary for an understanding of the invention.

The mobile device 102 comprises a processing unit 200 for carrying out operational processing for the mobile device 102. The mobile device 102 also has a RF communication section 202 for providing wireless communication via a radio communication link 108 with the GSM communication system 104 and a NFC communication section 204 for providing a NFC communication link 110 between at least one NFC target device and the mobile device 102 for use in providing NFC services. The mobile device may, for example, establish a NFC communication link with a NFC target device having NFC capability via the NFC communication section 204 when the NFC target device is within a NFC range (e.g. couple of centimetres) of the mobile device 102. The RF communication section 202 typically includes, for example, an antenna 206, transmit and receive paths 208 including a modulation/demodulation section (not shown), and a coding/decoding section (not shown), as will be known to a skilled person and thus will not be described further herein. The NFC communication section 204 typically includes, for example, a NFC antenna 210 and a modulation/demodulation section 212 (which will be referred to in the following as a NFC modem 212 but is also known as a ContactLess Frontend (CLF) unit), as will be known to a skilled person and thus will not be described further herein. The communication sections 202, 204 are coupled to the processing unit 200. The NFC modem 212 is coupled to the processing unit 200 via an interface element 213, 215. In an example of the present disclosure, the interface element 213, 215 may be a Host Controller Interface (HCI) interface. The HCI interface 213, 215 may be similar to the HCI interface between the UICC and NFC modem which is defined by the ETSI standard identified in the introduction. The interface element 213, 215 thus includes a HCI section 213 in the NFC modem 212 and an HCI section 215 in the processing unit 200 which may be coupled via an ISO link or any other suitable connection (such as USB, I²C)_{.}

The NFC communication section 204 in accordance with an example of the disclosure is arranged to detect when at least one NFC target device, such as device 106, is within a NFC range (e.g. a couple of centimetres) of the communication section 204 such that a NFC communication link can be established between the mobile device 102 and at least one NFC target device 106. The NFC range depends on the RF field generated by the NFC communication section 204 at the NFC antenna 210. For example, the NFC range depends on how far from the NFC communication section 204 there is still enough RF field to provide the minimum power to a NFC target device 106, which minimum power is required to establish communication between the NFC target device 106 and the mobile device 102 (for example, to turn the NFC target device 106 on and for the device 106 to respond to the mobile device 102). The minimum power is dependent on the NFC target device 106 and thus, the NFC range may vary for different NFC target devices 106. In other words, the NFC communication section 204 is arranged to detect when at least one NFC target device is within the RF field generated at the NFC antenna 210 so that a NFC communication link may be established. In an example, the NFC communication section 204 detects NFC target devices 106 by activating a detection loop based on a scanning or polling mechanism. In order to initiate a scan, the NFC modem 212 is arranged to send activation requests in the RF field generated by the NFC antenna 210 in a loop until a NFC target device responds. The NFC modem 212 scans for NFC target devices of different types of RF technologies, such as Type A, Type B, Type B' and Type F (as indicated above) by sending the appropriate activation requests in accordance with the different protocols defined by the different types of RF technologies. For each type of RF technology, the NFC modem 212 sends an activation request in the RF field and waits for a potential response. If a NFC target device is within the NFC range of the RF field for the NFC target device and the activation request is in accordance with the type of NFC target device, the NFC target device responds to the activation request and the NFC modem 212 receives a response. Once at least one NFC target device has been detected, the detection loop (ie. the sending of activation requests) is stopped. In an alternative arrangement, the NFC communication section 204 may be arranged to detect NFC target devices by a 'one shot' detection mechanism as described in the introduction.

The sending of activation requests, the receiving of activation requests and the receiving of responses from NFC target devices is managed by RF logic circuitry (not shown) in the NFC communication section 204. The RF logic circuitry may be part of the NFC modem 212 or separate and is arranged to control the RF activities required to detect NFC target devices. For example, in an example arrangement where the NFC communication section 204 or NFC modem 212 includes a processing unit (not shown), such as a CPU, the RF logic circuitry may be an element of the CPU.

When the NFC modem 212 receives a response from a NFC target device, the NFC modem 212 may be arranged to trigger the HCI 213 to generate and send an event to a NFC application element. In the case of detecting that a NFC target device 106 has been detected, an EVT_TARGET_DISCOVERED event may be generated.

The NFC communication section 204 is further arranged to detect when a communication link between the mobile device 102 and a detected NFC target device 106 is lost or broken. A communication link may be broken or lost when a detected NFC target device 106 is moved away from the communication section 204 such that it is removed from within the NFC range or when communication is lost between the mobile device 102 and a NFC target device 106 still within the NFC range, for example due to a protocol error or a wrong RF command which can lead to a RF communication session termination. As an example, a MIFARE^{™} tag within the NFC range of the RF field generated by the NFC communication section 204 is arranged to enter a security state when a wrong authentication command is received by the tag. In the security state, it is not possible to exchange commands with the tag without restarting the NFC target activation process (as if the tag first enters the RF field). In other words, the NFC communication section 204 is arranged to detect when a detected NFC target device can no longer communicate in the NFC range of the RF field.

The NFC communication section 204 in accordance with an example of the disclosure further comprises a detector 217 for detecting a break in a communication link when a detected NFC target device 106 is moved away from the communication section 204 such that it is outside the NFC range. In an example and as shown in FIG. 2, the detector 217 is part of the NFC modem 212. It will be appreciated that the detector 217 may alternatively be a separate unit to that of the NFC modem 212. ?

In an example, the detector 217 includes logic circuitry 217 (such as an ASIC) coupled to the NFC antenna 210 for monitoring a parameter of a coil which is part of the NFC antenna 210. The parameter may for example be the inductance of the coil or the impedance of the coil. The inductance of the NFC antenna coil changes when another coil, which for example may be part of the NFC antenna of the NFC target device 106, is within a certain distance of the NFC antenna coil. Thus, once a NFC target device has been detected as being within the NFC range of the NFC communication section 204 when communication can be established, the inductance of the NFC antenna coil in the mobile device 102 is changed. When the detected NFC target device is moved away from the NFC communication section 204 so that it is no longer within the NFC range of the NFC communication section 204, the inductance of the NFC antenna coil will change again. Thus, the change in inductance can therefore be used to detect when a NFC target device 106 is within the NFC range of the communication section 204 and then is subsequently removed from within the NFC range of the communication section 204. The change in inductance of the NFC antenna coil due to the presence of the NFC coil of a NFC target device 106 is detected by the logic Circuitry 217 and the logic circuitry can then provide a signal at an output of the detector 217 indicating that a NFC target device 106 has been detected within the NFC range. When more than one NFC target device is within the NFC range, there will be a greater change in inductance which can be detected by the logic circuitry.

Once a NFC target device 106 has been detected by the NFC antenna coil and logic circuitry of the detector 217, when the detected NFC target device 106 moves away from the mobile device 102 so that it is no longer within the NFC range (in other words, when it is no longer within the RF field of the NFC antenna coil so that for example the NFC target device 106 can receive sufficient power to communicate with the mobile device 102), the inductance of the NFC antenna coil changes again. The change in inductance of the NFC antenna coil due to the removal of the NFC coil of a detected NFC target device 106 from the RF field is detected by the logic circuitry and the logic circuitry can then provide a signal at the output of the detector 217 indicating that a NFC target device 106 has been removed from within the NFC range. The signal at the output of the detector 217 may be used by the NFC modem 212 to trigger the HCI 213 to generate and send an event to a NFC application element. In the case of detecting that a NFC target device 106 has been removed, an EVT_TARGET_REMOVED event is generated.

In an arrangement in which the NFC communication section 204 or NFC modem 212 includes a processing unit (not shown), such as a CPU, the CPU may be in a low power consumption mode (e.g. sleep mode) whilst the detector 217 monitors the inductance of the NFC antenna coil so that power consumption is kept to a minimum. In the sleep mode, for example, the elements of the NFC communication section 204 that perform the RF activities may be suspended in order to reduce power consumption. Furthermore, in order to save power, the detector 217 may only be powered when a NFC target device has been detected and it is desired to detect removal of the detected NFC target device.

It will be appreciated that other types of detectors may be used to detect a NFC target device within a NFC range of the communication section 204 and to detect when the detected NFC target device is removed from within the NFC range. For example, a proximity sensor or a camera may be used.

Details of an example implementation of the detector 217 may be found in PCT patent application no. PCT/US08/78077 having the same Applicant as the subject application (having Applicant's reference number CS31150RL). The entire disclose of PCT/USOB/78077 is incorporated herein by reference.

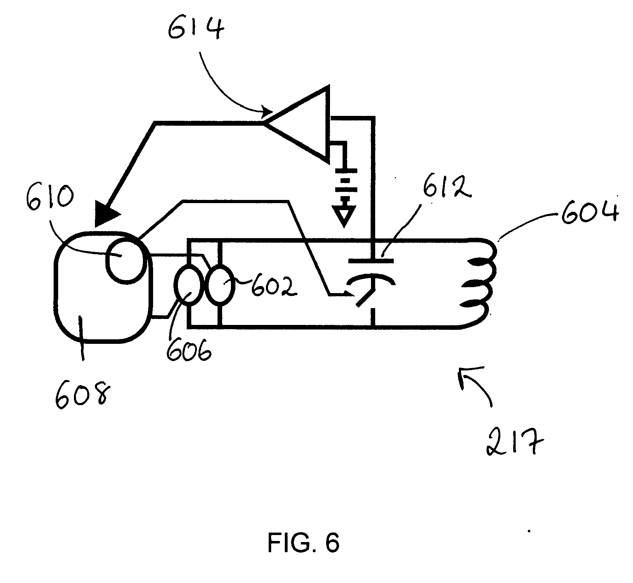

In this example implementation and as shown in FIG. 6, the detector 217 includes a probing oscillator 602 that is configured to selectively apply a probing signal to excite the NFC antenna coil 604. The probing oscillator 602 may be separate to or part of a communication oscillator 606 which is arranged to excite the NFC antenna coil 604 when the mobile device 102 is communicating with NFC target devices. A communication circuit 608 (which may be, for example, an element of the CPU of the NFC modem 212) operates to communicate with other devices by communicating data in RF form by inducing a current through the NFC antenna coil 604 upon being exited by the communication oscillator 606. Logic circuitry 610 which is shown as being an element of the communication circuit 608 but which may alternatively be separate, is configured to control the external coil detection process and at predetermined intervals is configured to couple a capacitor 612 across the NFC antenna coil 604 and to cause the probing oscillator 602 to apply the probing signal to the NFC antenna coil 604. A comparator 614 is coupled to the antenna coil 604 and is configured to sense the resulting signal across the parallel combination of the capacitor 612 and the NFC antenna coil 604.

The magnitude of resulting signal depends, amongst other factors, on the inductance of the NFC antenna coil 604. When an magnetically conductive device (e.g. a NFC device) is within close proximity of the NFC antenna coil 604, its overall inductance will change and this will affect the magnitude of the probing signal being applied to the NFC antenna coil 604. The change in magnitude of the probing signal is detected by the comparator 614. The detector 217 is arranged such that when an external magnetically conductive device becomes located within the NFC range of the NFC antenna coil 604, the output of the comparator 614 is configured to transition from a first state to second sate. This transition is detected by the logic circuitry 610 which notifies the communication circuit 608 which then attempts to communicate with the device to determine whether it is an NFC device. Thus, the communication circuit 608 may remain in sleep mode whilst the detector 217 operates to detect devices within the NFC range.

The NFC communication section 204 in accordance with an example of the disclosure further comprises a communication detector 219 for detecting a break in a communication link when communication between the wireless communication device and the detected at least one NFC target device is lost. For example, when the NFC target device is still within the NFC range of the NFC communication section 204 but RF communication is lost. In an example and as shown in FIG. 2, the communication detector 219 is part of the NFC modem 212 and the communication detector 219 detects that communication is lost from the commands exchanged between the mobile device 102 and the NFC target device 106. It will be appreciated that the detector 217 may alternatively be a separate unit to that of the NFC modem 212. For example, in an example arrangement where the NFC communication section 204 or NFC modem 212 includes a processing unit (not shown), such as a CPU, the communication detector 219 may be an element of the CPU. The signal at the output of the communication detector 219 may be used by the NFC modem 212 to trigger the HCI 213 to generate and send an event to a NFC application element. In the case of detecting that communication is lost, an EVT_TARGET_REMOVED event is generated. More details of these events will be given below.

The mobile device 102 also has a Man Machine Interface MMI 214, including elements such as a key pad, microphone, speaker, display screen, for providing an interface between the mobile device 102 and a user of the device. The MMI 214 is also coupled to the processing unit 200.

The processing unit 200 may be a single processor or may comprise two or more processors carrying out the processing required for the operation of the mobile device 102. The number of processors and the allocation of processing functions to the processing unit is a matter of design choice for a skilled person. The mobile device 102 also has a program memory 216 in which are stored programs containing processor instructions for operation of the mobile device 102. The programs may contain a number of different program elements or sub-routines containing processor instructions for a variety of different tasks, for example, for: communicating with the user via the MMI 214; and processing signalling messages (e.g. paging signals) received from the communication system 104. The program memory 216 is shown as separate to the processing unit 200 in FIG. 2 but it will be appreciated that the program memory may be part of the processing unit.

The mobile device 102 may further comprise a NFC unit 218 which can act as a secure element to store at least one NFC application element for use in providing at least one NFC service. The NFC unit 218 may store only one NFC application element but typically, the NFC unit 218 will store a plurality of NFC application elements associated with a plurality of NFC services, with some of the services being of the same type. For example, the NFC unit 218 may store several reader application elements such as a NFC application element for reading and registering business card contacts in the mobile device 102, a NFC application element for reading and setting Bluetooth configuration details in the mobile device 102 and a NFC application element for reading and browsing URLs stored on NFC target devices and/or may store several contactless payment application elements from different service providers such as MasterCard®, Visa®, and American Express®. The NFC unit 218 is coupled to the processing unit 200 and may comprise a removable module or a module incorporated into the mobile device 102. The NFC unit 218 may also be coupled to the NFC communication section 204. Whether the module is removable or incorporated into the mobile device 102, the module may be a dedicated module whose sole function is for providing NFC services or may be a module that has other functions additional to providing NFC services.

When the NFC unit 218 includes a removable module (represented by the dotted box 220 in FIG. 2), an interface 222 is coupled to the processing unit 200 for interfacing between the removable module 220 and the processing unit 200. The removable module 220 may be a Subscriber Identity Module (SIM) card or a Universal Integrated Circuit Card (UICC) which, in addition to storing network specific information used to authenticate and identify the subscriber on the GSM communication system 104 (and/or other systems) to control access, also stores the NFC application elements. In this case, the interface 222 is a SIM or UICC interface. The UICC card is the name of the standardised platform that can run several telecom applications such as the USIM application for a 3G network, or the SIM application for a 2G network, or others. The UICC card was introduced with the release 99 of the 3GPP standards, and replaces the SIM platform (that has GSM capabilities only). The term UICC card will be used for the rest of the document to designate the Integrated Circuit Card (ICC) used in a mobile phone for the support of the telecom applications such as USIM, SIM, and ISIM.

Communication between the NFC unit 218 and the processing unit 200 may occur via a direct connection through a serial link, such as an ISO link between the UICC interface 222 and the processing unit 200, or via the NFC modem 212 that acts as a proxy.

When NFC unit 218 is a dedicated module that is incorporated into the mobile device 102, the module may be soldered on the main Printed Circuit Board (PCB) of the mobile device 102 or may be a removable module such as a memory card and will act as a dedicated secure memory coupled to the processing unit 200, for example via a ISO link or any other suitable connection (such as USB, I²C). The dedicated module may comprise, for example, an Integrated Circuit (IC) which is substantially the same as the IC used for contactless smartcard devices.

The NFC unit 218 may alternatively be an element in the mobile device 102 which emulates a UICC card or a memory card. For example, the NFC unit 218 may be an NFC unit element (not shown) which is part of the program memory 216.

The NFC application elements have so far been described as being stored in the NFC unit 218. Alternatively or additionally, one or more NFC application elements may be stored in the program memory 216 or another part of the processing unit 200.

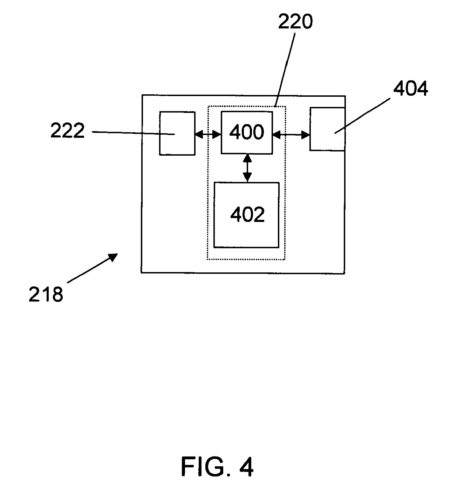

FIG. 4 shows a simplified schematic diagram of an example of a UICC implementation of a NFC unit 218 in accordance with an embodiment of the disclosure. The UICC NFC unit 218 comprises the UICC interface 222 for coupling to the processing unit 200, the UICC card 220 when coupled to the mobile device 102 and an interface 404 for coupling to the NFC modem 212. In an example, interface 404 is part of the interface element 213, 215 which controls the communication of data with the NFC modem 212 according to a protocol standardised by ETSI (ETSI 102 622). Interface 404 is coupled to the HCI section 213 in the NFC modem 212. ETSI standards 102 613 and 102 622 standardise a connection link, referred to as Single Wire Protocol (SWP), and the interface sections 404 and 213 for command and data exchanges. The UICC card 220 typically comprises a processor 400 and memory 402.

In the following, by way of example, the interface element 213, 215 and 404 is described as an HCI interface, with the connection and communication between interface 404 and interface section 213 being as defined by the ETSI standards for NFC. Other interface elements may be used instead.

An NFC application element running on a mobile device communicates with the NFC modem 212 through the HCI interface element 213, 215, 404. If the NFC application element is stored in the NFC unit 218, the communication may occur via the HCI section 404. If the NFC application element is stored in the program memory 216 or processing unit 200, the communication occurs via the HCI section 215.

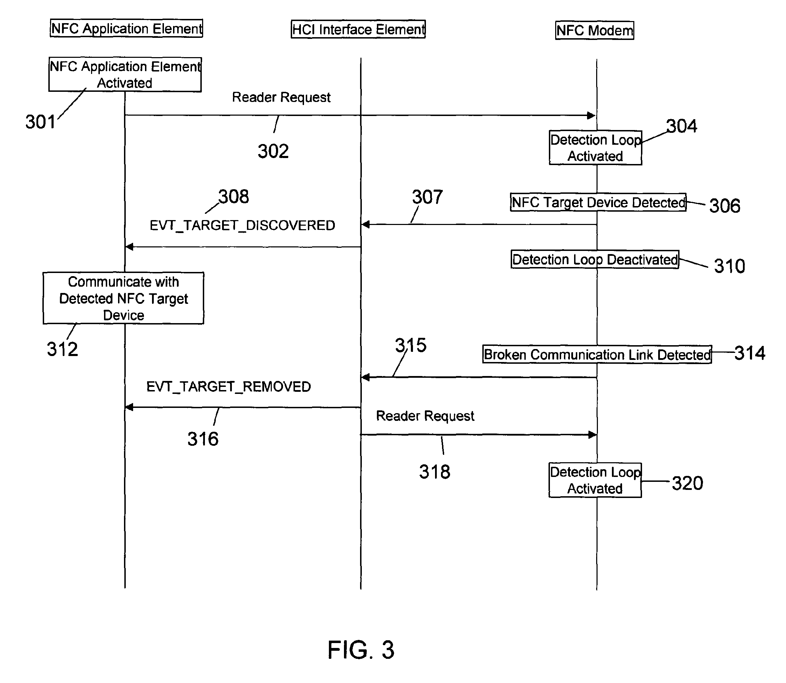

An example of a method of providing communication between a wireless communication device capable of providing a Near Field Communication service and at least one Near Field Communication target device in accordance with an embodiment of the disclosure will now be described with further reference to FIG. 3. In the example described in the following, a user selects a reader NFC service so that the mobile device 102 operates in a reader mode of operation according to a reader application element. It will however be appreciated that the use of a detector to detect removal of a NFC target device may apply to other modes of operation such as a writer mode of operation or a peer-to-peer mode of operation as described above.

When a reader application element is activated, for example, by a user of the mobile device 102 selecting a reader NFC service associated with the reader application element via the MMI 214, the mobile device 102 enters a reader mode of operation, step 301 in FIG. 3. In order to detect whether there is one or more NFC target devices within a NFC range of the NFC communication section 204, the activated reader application element sends a reader request (step 302 in FIG. 3) to the NFC modem 212 of the NFC communication section 204 via the HCI interface element 213, 215, 404 to activate the NFC communication section 204 to detect one or more NFC target devices within the NFC range of the communication section 204, step 304 of FIG. 3. In the example described with reference to FIG. 3, the activated reader application element is stored in the program memory so the reader request is sent via HCI interface sections 215 and 213. In response to the reader request, the NFC modem 212 may activate a detection loop based on a scanning mechanism whereby activation requests are sent in a loop until a NFC target device responds.

When an output 307 of the NFC modem 212 indicates that at least one NFC target device has been detected within the NFC range, step 306, the NFC modem 212 sends a target discovered event, defined by the HCI interface element as EVT_TARGET_DISCOVERED, to the activated reader application element through the HCI interface element 213, 215, step 308, and deactivates the detection loop, step 310.

The EVT_TARGET_DISCOVERED event contains information about the detected NFC target devices and thus, target device information is also sent by the HCI interface element 213, 215 to the activated reader application element. The target device information for each NFC target device is received from the NFC target device itself when it responds to the NFC modem 212 in response to the activation request sent during the detection loop. During the detection loop, several commands are sent to the NFC target device to which the NFC target device responds. The target device information may include for each detected NFC target device identification information of the detected NFC target device, and may also include one or more of the following: application data, the RF type of the detected NFC target device which defines the RF modulation and are typically standardised (for example, Type A (ISO/IEC 14443 parts 2, 3 and 4), Type B (ISO/IEC 14443 parts 2, 3 and 4), Type B' (part 2) or Type F (ISO/IEC 18092 also known as NFCIP-1)), protocols supported by the detected NFC target device, memory mapping (the type of memory mapping is used by the NFC application element to send corresponding commands for data exchange - for example, there are currently four types of memory mapping defined by the NFC Forum), etc.. The activated reader application element may then communicate with one or more of the detected NFC target devices so as to exchange data, step 312. The reader application element updates a register (not shown) based on the EVT_TARGET_DISCOVERED event and the target device information.

In the event that several NFC target devices are detected, the NFC modem 212 sends, as part of the target device information, a list of the detected NFC target devices to the activated reader application element and the activated reader application element updates a register with the list of detected NFC target devices. The activated reader application element may therefore communicate with one or more of the detected NFC target devices that are listed in its register by sending an activation request identifying the one or more of the detected NFC target devices to the NFC modem 212.

In the event that several NFC target devices are detected and the register of the reader application element updated for those detected NFC target devices, the NFC RF standard (NFCIP-1) specifies however that only one detected NFC target device can be addressed at a time by the mobile device 102. The other detected NFC target devices remain in a HALT state waiting for a wake-up event initiated by the activated reader application element. The activated reader application element is not aware of which NFC target devices are in a HALT state. The NFC modem 212 sends a wake-up event to a particular NFC target device in a HALT state in response to the activated reader application sending a reader (or write) request to the NFC modem 212 for that particular NFC target device and sends a HALT request to the other detected NFC target devices. Thus, the activation or deactivation of the NFC target devices is controlled by the NFC modem 212 or a NFC stack (not shown). The NFC stack is a library providing high level services to the NFC application elements and managing the low level commands to interface with the NFC modem 212.

When a communication link between the mobile device 102 and a detected NFC target device has been broken (for example, when a detected NFC target device is removed from within the NFC range or when the communication is lost between the mobile device 102 and the NFC target device still within the NFC range), the NFC communication section 204 detects the break (step 314) and in response, the NFC modem 212 sends a target removed event, defined by the HCI interface element as EVT_TARGET_REMOVED, to the activated reader application element through the HCI interface element 213, 215, step 316. For example, when a communication link is broken due to a detected NFC target device being moved from within the NFC range, the change in inductance in the NFC antenna coil due to the detected NFC target device leaving the RF field of the NFC antenna 210, is detected by the detector 217 and the output 315 of the detector 217 indicates that a communication link with a detected NFC target device is broken, step 314. For example, when a communication link is broken due to communication between a detected NFC target device and the mobile device 102 being lost, the communication detector 219 detects the loss in communication and an output of the communication detector 219 indicates that a communication link with a detected NFC target device is broken, step 314.

The target removed event EVT_TARGET_REMOVED is a new event defined in the HCI for NFC to notify a NFC application when at least one detected NFC target device has been removed. A removed detected NFC target device may have been moved away from the RF field or the communication link with the removed detected NFC target device has otherwise been broken.

In an example, the target removed event EVT_TARGET_REMOVED may contain information about the detected NFC target devices which have been removed and thus, removed target device information is also sent by the HCI interface element 213, 215 to the activated reader application element. If a field for this removed target device information is empty in an EVT_TARGET REMOVED event sent to the NFC application element, then the NFC modem 212 was not able to identify which of the detected NFC target devices have been removed from the RF field. Whether the removed target device information is generated and sent depends on the hardware capabilities of the NFC modem 212. The reader application element updates a register (not shown) based on the EVT_TARGET_REMOVED event received from the modem 212 and if included, the removed target device information. For example, the list of detected NFC target devices in the register may be updated to remove the detected NFC target device from the list that has been identified by the EVT_TARGET REMOVED event as having been removed from the RF field.

In response to the EVT_TARGET_REMOVED event being generated, the HCI interface element 213, 215 is arranged to send a reader request (step 318) to the NFC modem 212 to activate the NFC communication section 204 to start a detection loop to detect one or more NFC target devices in the RF field of the NFC antenna 210, step 320.

Thus, the NFC communication section 204 is activated to start the detection loop in response to a reader request from an activated reader application element (step 304) and in response to a reader request from the HCI interface element once the reader application element has been notified that a detected NFC target device has been removed from the RF field via an EVT_TARGET_REMOVED event.

By implementing the new HCI event EVT_TARGET_REMOVED, the detection of the removal of detected NFC target device from the RF field of the NFC antenna 210 in accordance with the disclosure is at the initiative of the NFC communication section 204 (e.g. the NFC modem 212 monitoring the inductance of the antenna coil) and the HCI interface element 213, 215 and so may be performed independently of the reader application element. Thus, no additional exchange requests need to be sent by the reader application element to detect if a detected NFC target device is still present in the RF field or not. Indeed, the reader application element is notified when at least one detected NFC target device has left the RF field when it receives the event EVT_TARGET_REMOVED from the HCI interface element 213, 215. This ensures real-time detection and provides optimum processing by the activated reader application element.

By reducing the amount of exchange requests sent by the NFC application element to determine if detected NFC target devices were still present in the RF field or not, the implementation of the new event EVT_TARGET_REMOVED also reduces power consumption in the mobile device 102. By the EVT_TARGET REMOVED event sent to the NFC application element, the NFC application element can determine which detected NFC target devices have been removed and so the NFC application element can update its register for the detected NFC target devices and not exchange any requests with those target devices that have been removed. Power consumption is therefore reduced by reducing RF exchanges at the NFC modem 212 and by reducing the processing in the mobile device 102 required to process the exchange requests. In addition, the circuitry required to perform the RF exchanges in order to detect device removal can be powered down so as to further reduce power consumption. In an example arrangement, the detector 217 can be powered down until at least one NFC target device has been detected to further reduce power consumption.

The NFC application elements can be native applications or Java applications. Currently, a Java committee that is focussed on implementing Java mobile technology is developing a specification for an API for NFC services referred to as JSR257: Contactless Communication API. This specification will define J2ME Optional Packages for contactless communication, one package for bi-directional communication and the other for accessing read-only information.

The JSR257 specification defines a target listener mechanism which requires a discovery manager to enable automatic NFC target device detection in a mobile device. The target listener and discover manager implementation as defined in JSR257 may be associated with the NFC application elements and so may be stored in the program memory 216, processing unit 200 or NFC unit 218 for use by the NFC application elements when called.

According to the JSR257 specification, a NFC application element that registers a target listener, such as a NFC target device of a certain type, with the discovery manager, receives a target event with the properties of the NFC target devices that enter the RF field of the antenna coil. The JSR257 API requires new events to be sent each time new NFC target devices enter the RF field. This event management has to be automatically handled by the implementation of the JSR257 and is not the responsibility of the NFC application element. However, in the arrangements implementing the ETSI standardised HCI API as described in the introduction, the detection loop is stopped once a NFC target device is detected and a EVT_TARGET_DISCOVERED event is generated and is only started when the NFC application element sends a reader request to the NFC modem 212. Furthermore, when a detected NFC target device is removed from the RF field, the NFC application element has to determine NFC target device removals. Since the event management in the known systems implementing the standardised HCI API is not automatic, the automatic event management as required by JRS257 cannot be supported.

By implementing the new HCI event EVT_TARGET_REMOVED, the detection of the removal of detected NFC target device from the RF field of the NFC antenna 210 in accordance with the disclosure is at the initiative of the NFC communication section 204, for example by the NFC modem 212 monitoring the inductance of the antenna coil, and the HCI interface element 213, 215 and so may be performed independently of the NFC application element. Furthermore, by re-starting the process for detecting NFC target device in response to the EVT_TARGET_REMOVED event, the target detection loop can be re-started automatically and independently of the NFC application element. This enables the discovery manager and target listener implementation as defined in the JSR257 to be supported.

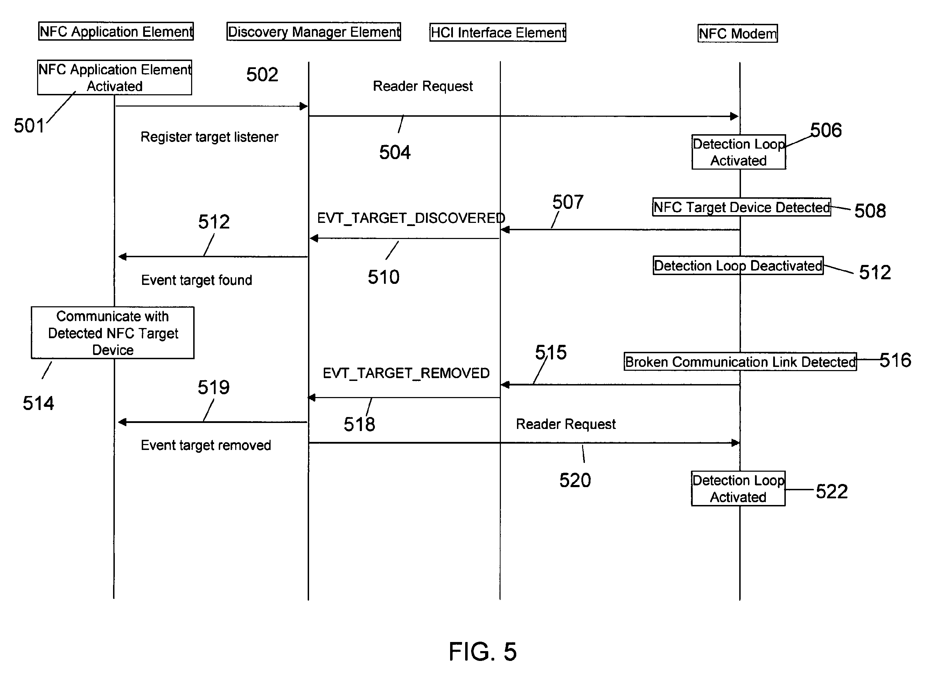

An example of a method of providing communication between a wireless communication device capable of providing a Near Field Communication service and at least one Near Field Communication target device in accordance with a further embodiment of the disclosure which supports the discovery manager and target listener implementation as defined in the JSR257 will now be described with further reference to FIG. 5. In the example described in the following, a user selects a reader NFC service so that the mobile device 102 operates in a reader mode of operation according to a reader application element. It will however be appreciated that the use of a detector to detect removal of a NFC target device may apply to other modes of operation such as a writer mode of operation or a peer-to-peer mode of operation.

The method shown in FIG. 5 and described below is similar to the method shown and described with reference to FIG. 3. However for the method shown in FIG. 5, the interface element includes the HCI interfaces element 213, 215, 404 and also a discovery manager API or element 500 which is an implementation as defined in JSR257. The discovery manager element 500 is associated with the NFC application elements and so is stored in the program memory 216, or processing unit 200 or NFC unit 218.

When a reader application element is activated, for example, by a user of the mobile device 102 selecting a reader NFC service associated with the reader application element via the MMI 214, the mobile device 102 enters a reader mode of operation, step 501 in FIG. 5. When the reader application element wants to be notified when one or more NFC target devices meet a certain criteria (e.g. the NFC target devices are of a certain type or have a particular ID) enters the RF field of the NFC antenna (i.e. is within a NFC range from the NFC communication section 204), the activated reader application element registers a target listener with the discovery manager element 500, step 502. The reader application element may also or instead register a target listener with the discovery manager element which relates to the application elements (referred to as applets) stored on NFC target devices. For example, cards complying with ISO14443-4 contain applets which are identified with an Application Identifier (AID). The mobile device 102 can then register a target listener looking for an AID of an application element stored in any type of NFC target device. In response, the discovery manager element 500 sends a reader request (step 504) to the NFC modem 212 through the HCI interface element 213, 215, 404 to activate the NFC communication section 204 to detect one or more NFC target devices within the NFC range of the communication section 204, step 506 of FIG. 5. In the example described with reference to FIG. 5, the activated reader application element is stored in the program memory so the reader request is sent via HCI interface sections 215 and 213. In response to the reader request, the NFC modem 212 may activate a detection loop based on a scanning mechanism whereby activation requests are sent in a loop until a NFC target device responds.

When an output 507 of the NFC modem 212 indicates that at least one NFC target device has been detected within the NFC range, step 508, the NFC modem 212 sends a target discovered event, defined by the HCI interface element as EVT_TARGET_DISCOVERED, to the discovery manager element 500 through the HCI interface element 213, 215, step 510, and deactivates the detection loop, step 512.

The discovery manager element 500 forwards the EVT_TARGET_DISCOVERED event as a target detected event to the activated reader application element, step 512. The discovery manager element 500 also performs a comparison between the target device information received from a detected NFC target device and the target listener which was registered with the discovery manager element 500 by the activated reader application. As mentioned previously, the target listener registered by the activated reader application identifies the criteria of interest to the activated reader application (e.g. the type of the NFC target device or ID of a NFC target device or AID of an application element stored in NFC target device) and thus, by comparing the registered target listener and the target device information received from the detected NFC target device, the discovery manager element 500 can determine whether the detected NFC target device (or an application element stored in the detected NFC target device) falls within the criteria defined by the activated reader application and registered with the target listener. Some application elements can register a generic target listener which indicates that the application elements are to be notified of all the detected NFC target devices (whatever the type). Other application elements may register a target listener per target type which indicates that the application elements are to be notified only when the type of detected NFC target device matches the registered type.

The EVT_TARGET_DISCOVERED event contains information about the detected NFC target devices and thus, target device information is also sent by the HCI interface element 213, 215 to the discovery manager element 500. The target device information may include for each detected NFC target device identification information of the detected NFC target device, and may also include one or more of the following: application data, the RF type of the detected NFC target device which defines the RF modulation and are typically standardised (for example, Type A (ISO/IEC 14443 parts 2, 3 and 4), Type B (ISO/IEC 14443 parts 2, 3 and 4), Type B' (part 2) or Type F (ISO/IEC 18092 also known as NFCIP-1)), protocols supported by the detected NFC target device, memory mapping (the type of memory mapping is used by the NFC application element to send corresponding commands for data exchange - for example, there are currently four types of memory mapping defined by the NFC Forum), etc..

If information for a detected target device (e.g. identification information or Type information), which is required in order to compare with the registered target listener, is not received by the discovery manager element 500, then the discovery manager element 500 is re-launched to try and obtain the 'missing' information.

The activated reader application element may then communicate with one or more of the detected NFC target devices so as to exchange data, step 514. The reader application element updates a register (not shown) based on the EVT_TARGET DISCOVERED event and the target device information. For example, the activated reader application element may communicate only with the detected NFC target devices that match the criteria set by the registered target listener.

When a communication link between the mobile device 102 and a detected NFC target device has been broken (for example, when a detected NFC target device is removed from within the NFC range or when the communication is lost between the mobile device 102 and the NFC target device still within the NFC range), the NFC communication section 204 detects the break (step 516) and in response, the NFC modem 212 sends a target removed event, defined by the HCI interface element as EVT_TARGET_REMOVED, to the discovery manager element 500 through the HCI interface element 213, 215, step 518. For example, when a communication link is broken due to a detected NFC target device being moved from within the NFC range, the change in inductance in the NFC antenna coil due to the detected NFC target device leaving the RF field of the NFC antenna 210, is detected by the detector 217 and the output 515 of the detector 217 indicates that a communication link with a detected NFC target device is broken, step 516. For example, when a communication link is broken due to communication between a detected NFC target device and the mobile device 102 being lost, the communication detector 219 detects the loss in communication and an output of the communication detector 219 indicates that a communication link with a detected NFC target device is broken, step 516.

In response to the EVT_TARGET_REMOVED event, the discovery manager element 500 sends (step 519) an event target removed to the activated reader application element to notify the activated reader application element that at least one detected NFC target device has been removed from the RF field of the NFC antenna so that the activated reader application can update its register of detected NFC target devices. In an example, the target removed event EVT_TARGET_REMOVED may contain information about the detected NFC target devices which have been removed and thus, removed target device information is also sent by the discovery manager element 500 to the activated reader application element. In addition, in response to the EVT_TARGET_REMOVED event, the discovery manager element 500 sends a reader request to the NFC modem 212 through the HCI interface element 213, 215, step 520, to activate the NFC communication section 204 to re-start a detection loop to detect one or more NFC target devices in the RF field of the NFC antenna 210, step 522.

Thus, the implementation of the EVT_TARGET_REMOVED event in accordance with the disclosure provides a reliable way to automatically detect target removal from the RF field of the NFC antenna and so to implement the discovery manager as defined by JSR257 based on HCI events monitoring.

In the above examples, the EVT_TARGET DISCOVERED event is generated in response to the NFC modem 212 activating a detection loop whereby RF activation requests are sent and a NFC target device is detected when a response is received. In an alternative example arrangement, the detector 217 may be used to detect NFC target devices within the NFC range of the NFC communication section 204. In this example, arrangement, a reader request sent by an activated reader application element may activate the detector 217 (but not the detection loop which is used for the polling mechanism) such that a small current goes through the NFC antenna 210. The current is less than the current required for the polling mechanism but just enough to enable the monitoring of the change in the inductance in the antenna coil due to the presence of a NFC device. When a NFC device approaches the NFC antenna 210 and is within the NFC range, the detector 217 detects the presence of a potential NFC target device. The output of the detector 217 notifies the NFC modem 212 that a potential NFC device has been detected and in response, the NFC modem 212 activates the detection loop for detecting NFC target devices based on a polling mechanism. The polling mechanism to detect NFC target devices then operates as described above. Thus, the detector 217 may be used to trigger the activation of the polling detection loop once a NFC device has been detected in the NFC range. This enables for the NFC modem to activate the RF polling detection loop only when potential targets have been detected by the detector, so that power consumption can be reduced by reducing the time the RF polling detection loop is required to be powered.

In the foregoing description, the invention has been described with reference to specific examples of embodiments of the invention. It will, however, be evident that various modifications and changes may be made therein without departing from the broader scope of the invention as set forth in the appended claims.

## Claims

1. A wireless communication device for providing at least one Near Field Communication service to a user, the wireless communication device comprising:
at least one application element for use in providing the at least one Near Field Communication service;
a communication section for providing a communication link between at least one Near Field Communication target device and the wireless communication device when the at least one Near Field Communication target device is within a Near Field Communication range of the communication section, the communication section being arranged to detect a break in a communication link between the wireless communication device and at least one Near Field Communication target device; and
an interface element for notifying the at least one application element when at least one Near Field Communication target device is detected within the Near Field Communication range, the at least one application element being arranged to communicate over a communication link with a detected at least one Near Field Communication target device, and for generating and sending to the at least one application element a target removal event in response to the communication section detecting a break in a communication link between the wireless communication device and a detected at least one Near Field Communication target device.

2. The wireless communication device according to claim 1, wherein the interface element is further arranged to send a reader request to the communication section in response to the generation of the target removal event to activate the communication section to detect Near Field Communication target devices within the Near Field Communication range.

3. The wireless communication device according to claim 1, wherein the interface element is arranged to send a reader request to the communication section to activate the communication section to detect Near Field Communication target devices within the Near Field Communication range in response to a request from the at least one application element.

4. The wireless communication device according to any preceding claim, wherein the interface element is further arranged to send target device information to the at least one application element when the communication section detects at least one Near Field Communication target device within the Near Field Communication range, the target device information including identification information of the detected at least one Near Field Communication target device.

5. The wireless communication device according to any preceding claim, wherein the interface element is further arranged to send target device information to the at least one application element in response to generating the target removal event, the target device information including identification information of the at least one Near Field Communication target device whose communication link with the wireless communication device has been broken.

6. The wireless communication device according to any preceding claim, wherein the communication section is further arranged to detect at least one Near Field Communication target device within the Near Field Communication range, and wherein the interface element is further arranged to generate and send to the at lest one application element a target discovered event in response to the communication section detecting at least one Near Field Communication target device within the Near Field Communication range.

7. The wireless communication device according to any preceding claim, wherein the interface element includes a Host Controller Interface for generating and sending events including a target removal event.

8. The wireless communication device according to claim 7, wherein the interface element further includes a discovery manager element for managing events received from the Host Controller Interface including notifying the at least one application element of the events.

9. The wireless communication device according to any preceding claim, wherein the communication section includes a detector for detecting when at least one Near Field Communication target device is within the Near Field Communication range and for detecting a break in a communication link when a detected Near Field Communication target device is outside the Near Field Communication range from the communication section.

10. The wireless communication device according to claim 9, wherein the communication section comprises an antenna including an antenna coil and wherein the detector is arranged to monitor changes in a parameter of the antenna coil.

11. The wireless communication device according to any preceding claim, wherein the communication section includes a communication detector for detecting a break in a communication link when communication between the wireless communication device and the detected at least one Near Field Communication target device is lost.

12. A method of providing communication between a wireless communication device capable of providing a Near Field Communication service and at least one Near Field Communication target device, the wireless communication device having at least one application element for use in providing the at least one Near Field Communication service, and a communication section for providing a communication link between at least one Near Field Communication target device and the wireless communication device when the at least one Near Field Communication target device is within a Near Field Communication range of the communication section, the method comprising the steps of
notifying the at least one application element when at least one Near Field Communication target device is detected within the Near Field Communication range, the at least one application element being arranged to communicate over a communication link with a detected at least one Near Field Communication target device; and
generating and sending to the at least one application element a target removal event in response to detecting a break in a communication link between the wireless communication device and a detected at least one Near Field Communication target device.

13. The method of claim 12, further comprising sending a reader request to the communication section in response to generating the target removal event to activate the communication section to detect Near Field Communication target devices within the Near Field Communication range.

14. The method of claim 12 or 13, further comprising sending target device information to the at least one application element in response to generating the target removal event, the target device information including identification information of the at least one Near Field Communication target device whose communication link with the wireless communication device has been broken.
